(19) Europäisches Patentamt
European Patent Office
Office européen des brevets

(11) EP 1 681 309 A1

(12) **EUROPEAN PATENT APPLICATION**
published in accordance with Art. 158(3) EPC

(43) Date of publication:
**19.07.2006 Bulletin 2006/29**

(21) Application number: **04792997.1**

(22) Date of filing: **20.10.2004**

(51) Int Cl.:
***C08F 290/02*** *(1995.01)*

(86) International application number:
**PCT/JP2004/015881**

(87) International publication number:
**WO 2005/042598 (12.05.2005 Gazette 2005/19)**

(84) Designated Contracting States:
**AT BE BG CH CY CZ DE DK EE ES FI FR GB GR HU IE IT LI LU MC NL PL PT RO SE SI SK TR**

(30) Priority: **04.11.2003 JP 2003374221**

(71) Applicant: **KANEKA CORPORATION**
**Osaka-shi, Osaka 530-8288 (JP)**

(72) Inventors:
- **SAKAMOTO, Harumi**
  **Settsu-shi, Osaka 5660073 (JP)**
- **FUKUI, Yoshifumi**
  **Toyonaka-shi, Osaka 5600085 (JP)**

(74) Representative: **Vossius & Partner**
**Siebertstrasse 4**
**81675 München (DE)**

# (54) POLYOLEFIN GRAFT COPOLYMER, COMPOSITION AND METHOD FOR PRODUCING SAME

(57) The present invention provides a polyolefin graft copolymer which is produced by graft copolymerization of an olefin monomer and a macromonomer, which has good handleability and excellent dispersibility in a thermoplastic resin. In a composition including the polyolefin graft copolymer, excellent surface wettability is exhibited and the increase in elastic modulus is suppressed. The invention also provides a method for producing the polyolefin graft copolymer. Furthermore, the invention provides a composition containing the copolymer and a production method therefor. The polyolefin graft copolymer can be produced, in the presence of a coordination polymerization catalyst, by graft-copolymerizing an olefin monomer and a macromonomer having a multilayer structure in an aqueous system.

EP 1 681 309 A1

## Description

### Technical Field

The present invention relates to a polyolefin graft copolymer produced, in the presence of a coordination polymerization catalyst, by copolymerizing an olefin monomer and a macromonomer having a multilayer structure and a method for producing the same. The invention also relates to a composition containing the polyolefin graft copolymer.

### Background Art

Various polymeric materials are produced by various polymerization processes, such as bulk polymerization, solution polymerization, suspension polymerization, emulsion polymerization, and impregnation polymerization, and used. As the graft copolymer produced using emulsion polymerization, core-shell polymers are well known. Examples thereof include MBS resins produced by graft copolymerization of methyl methacrylate and styrene to butadiene rubber polymers, and (meth)acrylic rubber polymers having excellent impact resistance to which methyl methacrylate or the like is graft-copolymerized. These are used for improving impact resistance of thermoplastic resins, such as polyvinyl chloride. However, since the core-shell polymers generally have high polarity, the dispersibility of the core-shell polymers in polyolefin resins is low. A technique for dispersing highly polar fine particles, such as those of core-shell polymers, in polyolefin resins has been desired for a long time. However, it has been difficult, for example, to copolymerize an olefin monomer having low polarity to improve dispersibility.

On the other hand; polyolefin resins are commercially produced by coordination polymerization. Ziegler-Natta catalysts and metallocene catalysts are well known as coordination polymerization catalysts for olefins. However, when such early transition metal coordination polymerization catalysts are used, polar compounds react or coordinate with complexes or catalytic active species, resulting in loss of the activities or decomposition thereof. Therefore, it has been difficult to impart functionality by copolymerizing a polyolefin with a polar functional group-containing monomer and to conduct olefin polymerization in an emulsion polymerization system.

Late transition metal complex coordination polymerization catalysts are known as coordination polymerization catalysts having high tolerance to polar compounds. As exemplified in various articles (Chemical Review, 2000, Vol. 100, p. 1169; Journal of Synthetic Organic Chemistry, Japan, 2000, Vol. 58, p. 293; and Angewandte Chemie International Edition, 2002, Vol. 41, p. 544), when such catalysts are used, polyolefins can be polymerized without losing the activities even in the presence of a polar solvent, such as tetrahydrofuran, an ether, acetone, ethyl acetate, or water, and copolymers with polar vinyl monomers, such as alkyl acrylates, can also be obtained. However, even when these catalysts are used, the amount of the polar monomer copolymerizable with a polyolefin is limited. Therefore, a technique for producing a polyolefin copolymer containing a large amount of polar monomer has been desired for a long time.

In order to obtain a copolymer with a high polar monomer content, a technique is also known in which a polyolefin having a functional group copolymerizable with a vinyl monomer is allowed to react with a vinyl monomer, and is disclosed, for example, in PCT Japanese Translation Patent Publication No. 2001-524996. However, with respect to the graft copolymers obtained by this method, unlike core-shell polymers, it has been difficult to increase functionality by introducing multilayer-structured portions or to produce copolymers having multiple functions. For example, when a rubber-like copolymer is blended with a thermoplastic resin, it is possible to produce a flexible composition by decreasing elastic modulus. However, the following problems may arise: blocking of the copolymer during storage, resin clogging in apparatuses during processing, and poor handleability (workability when handled as powder). It has been difficult to obtain a copolymer which has all of good handleability and good dispersibility in a thermoplastic resin as the copolymer, and low elastic modulus and high surface wettability in a, composition including the copolymer and a thermoplastic resin.

### Disclosure of Invention

Accordingly, it is an object of the present invention to provide a novel polyolefin graft copolymer which is produced by graft copolymerization of an olefin monomer and a non-polyolefin macromonomer, in particular, a polar group-containing macromonomer, and which has multiple functions, for example, including the functions of a core-shell polymer, such as good handleability and capability of forming a composition in which the increase in elastic modulus is suppressed and which has high surface wettability, and the function of an olefin copolymer, such as excellent dispersibility in a thermoplastic resin, e.g., a polyolefin. It is another object of the invention to provide a composition including the polyolefin graft copolymer and methods for producing the polyolefin graft copolymer and the composition.

In order to overcome the problems described above, as a result of intensive research, the present inventors have found that it is possible to combine a technique of producing a multilayer-structured polymer by emulsion polymerization with a technique of olefin coordination polymerization, which are completely heterogeneous techniques. The present inventors have also found that when a macromonomer having a multilayer structure is copolymerized with an

olefin monomer, the resulting copolymer can easily be formed into powder having good handleability; the copolymer has excellent dispersibility in a thermoplastic resin, such as a polyolefin; in a composition including the copolymer, the increase in elastic modulus is suppressed, and the composition has excellent surface wettability. Thus, the present invention has been completed.

That is, the present invention relates to a polyolefin graft copolymer produced, in the presence of a coordination polymerization catalyst, by copolymerizing an olefin monomer and a macromonomer having a multilayer structure in an aqueous system.

A preferred embodiment relates to the polyolefin graft copolymer, wherein the macromonomer having the multilayer structure is a macromonomer having a two-layered structure including 10% to 95% by weight of a layer composed of a rubber-like polymer and 5% to 90% by weight of a layer composed of a hard polymer.

A preferred embodiment relates to the polyolefin graft copolymer, wherein the macromonomer having the multilayer structure is produced by emulsion polymerization using a redox initiator.

A preferred embodiment relates to the polyolefin graft copolymer, wherein the coordination polymerization catalyst is a complex containing a ligand having two imine nitrogen atoms and a late transition metal selected from Groups 8 to 10 in the periodic table.

A preferred embodiment relates to the polyolefin graft copolymer, wherein the olefin monomer is an $\alpha$-olefin.

Furthermore, the present invention relates to a method for producing a polyolefin graft copolymer comprising allowing a macromonomer having a multilayer structure, an olefin monomer, and a coordination polymerization catalyst to react with each other in an aqueous system.

Furthermore, the present invention relates to a thermoplastic resin composition containing the polyolefin graft copolymer. A preferred embodiment relates to the thermoplastic resin composition containing a polyolefin resin as a component.

The polyolefin graft copolymer of the present invention has good handleability. The graft copolymer has good dispersibility in a thermoplastic resin, in particular, a polyolefin. In the composition containing the graft copolymer, the increase in elastic modulus is suppressed, and the composition has excellent surface wettability.

Best Mode for Carrying Out the Invention

The present invention will be described in detail below.

The present invention relates to a polyolefin graft copolymer produced, in the presence of a late transition metal complex coordination polymerization catalyst, by graft-copolymerizing an olefin monomer and a macromonomer having a multilayer structure in an aqueous system, and a method for producing the same. In the present invention, the term "aqueous system" denotes conditions in which polymerization reaction is performed by dispersing starting materials, such as a catalyst and monomers, in a system including a continuous water layer, for example, conditions of emulsion polymerization or suspension polymerization or conditions similar to those of emulsion polymerization or suspension polymerization. The catalyst, the starting materials, and the product are not necessarily soluble in water, and may be insoluble or hardly soluble in water. In the present invention, the term "polyolefin graft copolymer" is defined as a copolymer produced by graft copolymerization of an olefin and a macromonomer.

Since the polyolefin graft copolymer of the present invention is produced using a macromonomer having a multilayer structure and an olefin monomer as starting materials, the resulting polyolefin graft copolymer has more industrial uses compared with a case in which a macromonomer having a single layer structure is used as a starting material. For example, when a single layer-structured macromonomer composed of a hard polymer is used, a copolymer having excellent handleability is obtained. When a single layer-structured macromonomer composed of a rubber-like polymer is used and when the resulting copolymer is blended with a thermoplastic resin, the elastic modulus of the resulting composition can be decreased. When a multilayer-structured macromonomer including both a rubber-like polymer and a hard polymer is used, the resulting copolymer has good handleability, and also the composition obtained by blending the copolymer with a thermoplastic resin has low elastic modulus, which are characteristics that can never be exhibited by a single layer-structured macromonomer.

In the present invention, the term "macromonomer" means an oligomer or polymer that has a functional group copolymerizable with another monomer. Macromonomers are known to have various compositions, such as olefin-based, vinyl-based, and silicone-based compositions, and various structures, such as linear structures, cyclic structures, hyperbranched structures, crosslinked particles, non-crosslinked particles, and multilayer-structured particles. Macromonomers can be synthesized by any of various production methods, such as anionic polymerization, cationic polymerization, radical polymerization, coordination polymerization, polycondensation, bulk polymerization, solution polymerization, suspension polymerization, and emulsion polymerization. Inorganic fine particles whose surfaces have been treated with a polymerizable functional group-containing surface treatment agent, such as a silane coupling agent, and polymerizable functional group-containing inorganic-organic complexes obtained by graft-copolymerizing monomers thereto can also be macromonomers.

In order that a macromonomer is graft-copolymerized with an olefin monomer, the macromonomer must have a group copolymerizable with the olefin. In view of satisfactory grafting efficiency, the macromonomer preferably has at least one group, and more preferably at least 10 groups, copolymerizable with an olefin per macromonomer molecule. The group copolymerizable with an olefin may be any functional group and is not particularly limited. In view of high reactivity of coordination polymerization, a functional group having an allyl terminus, a cyclic olefin terminus, a styryl terminus, or a (meth)acrylic terminus is preferred. In particular, a functional group having a (meth)acrylic terminus, an allyl terminus, or a dicyclopentenyl terminus is preferred.

The macromonomer having a multilayer structure used in the present invention is a macromonomer produced by graft copolymerization by emulsion polymerization of a polymer prepared by emulsion polymerization of at least one emulsion-polymerizable monomer with a monomer of a different type or having a composition different from that of the above-described monomer. Techniques for producing a multilayer-structured polymer by emulsion polymerization are commonly known and disclosed, for example, in Japanese Unexamined Patent Application Publication Nos. 2001-89648, 2002-363372, and 10-316724. Inorganic-organic complexes in which monomers are graft-copolymerized to the surfaces of inorganic fine particles dispersed in water can also be considered as one type of multilayer-structured macromonomer. From the standpoint that the elastic modulus can be suppressed to be low when the resulting polyolefin macromonomer is dispersed in a thermoplastic resin, preferably, the layers of the multilayer-structured macromonomer are each composed of an organic compound only.

In the macromonomer having a multilayer structure used in the present invention, the types and combinations of polymers constituting the individual layers are not particularly limited and known polymers and combinations may be used. The polymer constituting each layer may be crystalline or amorphous. The polymer may be a rubber-like polymer or a hard polymer. The terms "rubber-like polymer" and "hard polymer" used herein are the same as those generally used in the core-shell polymer field.

The number of layers is not particularly limited as long as it is two or more. The number of layers is counted based on the type and/or composition of the monomer, i.e., the starting material. Even in a copolymer including a combination of the same type of monomers, if there is a difference in at least one of the physical properties (e.g., glass transition temperature, density, elastic modulus, and color) between the monomers, the copolymer is considered to have different layers. For example, a layer composed of a copolymer including 50% of n-butyl acrylate and 50% of methyl methacrylate is considered to be different from a layer composed of a copolymer including 20% of n-butyl acrylate and 80% of methyl methacrylate.

The macromonomer having a multilayer structure used in the present invention preferably includes a layer for imparting low elastic modulus and a layer for improving handleability from the standpoint that handleability of the copolymer obtained by the macromonomer and the olefin monomer are satisfactory and that the elastic modulus of the composition including the macromonomer and a thermoplastic resin can be decreased. Examples of such a preferable multilayer structure include a two-layered structure including two layers of a rubber-like polymer and a hard polymer, respectively, a three-layered structure including three layers of a semi-rubber-like polymer, a rubber-like polymer, and a hard polymer, respectively, a structure having four or more layers including a plurality of rubber-like polymer layers and a plurality of hard polymer layers, a hollow structure having a cavity in any of these structures, a salami-like structure in which a rubber-like polymer is dispersed in a hard polymer layer, and another salami-like structure in which a hard polymer layer is dispersed in a rubber-like polymer. From the standpoint that the resulting copolymer has satisfactory handleability, a multilayer structure including at least one layer composed of a rubber-like polymer and at least one layer composed of a hard polymer is preferred, and a two-layered structure in which a shell layer composed of a hard polymer is disposed around a core layer composed of a rubber-like polymer is particularly preferred.

The main chain skeleton of the polymer constituting each layer in the multilayer structure may be linear or branched, or may have a three-dimensional network structure by crosslinking. From the standpoint that an adequate elastic modulus can be imparted, the main chain skeleton preferably has a three-dimensional network structure by crosslinking.

The macromonomer having a multilayer structure used in the present invention can be produced by a general emulsion polymerization technique. For example, a radically polymerizable monomer is subjected to emulsion polymerization to form a first layer, and a monomer is then added and polymerized to form a second layer, thus producing a macromonomer having a two-layered structure. Alternatively, a radically polymerizable monomer and a radical initiator are added to a latex of polysiloxane having a radically reactive group to perform copolymerization, thus producing a macromonomer having a two-layered structure. A monomer may be further added to repeat polymerization, thereby increasing the number of layers. An emulsifier, a polymerization initiator, a chain transfer agent, or the like may be added as necessary.

The types of the emulsifier, the polymerization initiator, and the chain transfer agent used for polymerizing each layer of the macromonomer having a multilayer structure may be the same in all layers or different between the layers.

The particle size of the macromonomer having a multilayer structure used in the present invention is in a range of 20 to 1,500 nm, preferably 25 to 1,000 nm, and more preferably 30 to 500 nm. When a macromonomer having a

particle size within the above range is used, dispersibility of the resulting polyolefin graft copolymer in a thermoplastic resin is particularly excellent. Herein, the average particle size of the macromonomer is a volume average particle size measured by the dynamic light scattering method with a Submicron Particle Sizer Model 370 (from NICOMP Corp., laser wavelength: 632.8 nm) using a sample prepared by dispersing the macromonomer in water.

When the macromonomer having a multilayer structure used in the present invention contains a rubber-like polymer and a hard polymer, the polymer constituting the rubber-like polymer layer preferably has a glass transition temperature of 20°C or lower, more preferably 0°C or lower, and particularly preferably -20°C or lower. The polymer constituting the hard polymer layer preferably has a glass transition temperature of 30°C or higher, more preferably 50°C or higher, and particularly preferably 80°C or higher. With respect to the glass transition temperature (Tg) of a polymer and the measuring method thereof, in the case of a homopolymer, the Tg can be obtained from the data in Polymer Handbook Fourth Edition (by John Wiley & Sons). In the case of a copolymer, the Tg can be calculated, using the data, according to the Fox equation:

$$Tg^{-1} = w_1Tg_1^{-1} + w_2Tg_2^{-1}$$

where $Tg_1$ and $Tg_2$ are the glass transition temperatures of the individual components, and $w_1$ and $w_2$ are the weight fractions of the individual components.

The ratio by weight of rubber-like polymer/hard polymer is preferably 10/90 to 95/5, more preferably 40/60 to 90/10, and particularly preferably 70/30 to 85/15 in view of excellent balance between the handleability of the resulting polyolefin graft copolymer and the low elastic modulus of a thermoplastic resin composition containing the graft copolymer.

The rubber-like polymer and the hard polymer may form a core-shell structure including an inner rubber-like, polymer layer and an outer hard polymer layer or a core-shell structure including an outer rubber-like polymer layer and an inner hard polymer layer. The structure may be a partially covered core-shell structure in which a shell layer covers only a part of a core layer or a salami-like structure in which a plurality of core particles are dispersed in a shell layer. From the standpoint that the handleability of the resulting polyolefin graft copolymer can be further improved, a core-shell structure in which a rubber-like polymer layer is disposed at the inside (core) and a hard polymer layer is disposed at the outside (shell) is preferred.

Specific examples of the polymer constituting the rubber-like polymer layer include diene rubbers, (meth)acrylic rubbers, silicone rubbers, styrene-diene copolymer rubbers, and (meth)acrylic-silicone composite rubbers. Among these, (meth)acrylic rubbers and silicone rubbers are preferred. In the present invention, the term "(meth)acrylic rubber" means a rubber-like polymer containing 50% by weight or more of a (meth)acrylic monomer and less than 50% by weight of a monomer copolymerizable with the (meth)acrylic monomer. The content of the (meth)acrylic monomer constituting the (meth)acrylic rubber is preferably 75% by weight or more, and more preferably 90% by weight or more. The content of the monomer copolymerizable with the (meth)acrylic monomer is preferably less than 25% by weight, and more preferably 10% by weight. In the present invention, the term "silicone rubber" means a rubber-like polymer containing 50% by weight or more of an organosiloxane and less than 50% by weight of a monomer copolymerizable with the organosiloxane. The content of the organosiloxane constituting the silicone rubber is preferably 75% by weight or more, and more preferably 90% by weight or more. The content of the monomer copolymerizable with the organosiloxane is preferably less than 25% by weight, and more preferably 10% by weight.

A rubber-like polymer core-hard polymer shell structure, which is a preferred example of a macromonomer having a multilayer structure used in the present invention, will be described below.

A (meth)acrylic rubber, which is a preferred example of a polymer constituting the rubber-like polymer core, is preferably a (meth)acrylic rubber produced by copolymerizing a (meth)acrylic monomer (A) (hereinafter referred to as compound (A)) with a monomer (B) (hereinafter referred to as compound (B)) having at least two radically polymerizable unsaturated groups per molecule. The (meth)acrylic rubber may also include a monomer (C) (hereinafter referred to as compound (C)) copolymerizable with the compound (A) and/or the compound (B) as necessary. Each component may be used in any amount without particular limitations. The compound (A) is used preferably in an amount of 50% to 99.99% by weight, and more preferably 75% to 99.9% by weight. As the amount of use of the compound (A) increases, the increase in elastic modulus when the resulting polyolefin graft copolymer is added to a polyolefin resin can be suppressed more reliably. The compound (B) is used preferably in an amount of 0.01% to 25% by weight, and more preferably 0.1% to 10% by weight. When the amount of use is in this range, the balance between the grafting efficiency of the rubber-like polymer and the hard polymer and low elastic modulus is particularly satisfactory. The compound (C) is used preferably in an amount of 0% to 50% by weight, and more preferably 0% to 25% by weight. Note that the total of the compound (A), the compound (B), and the compound (C) is 100% by weight.

The compound (A) is a component that constitutes the main skeleton of the (meth)acrylic rubber. Specific examples of the compound (A) include, but are not limited to, (meth)acrylates, such as methyl acrylate, ethyl acrylate,

propyl acrylate, n-butyl acrylate, 2-ethylhexyl acrylate, 2-ethylhexyl methacrylate, and lauryl methacrylate. A (meth) acrylic monomer, such as tert-butyl acrylate, hexadecyl acrylate, phenyl acrylate, methyl methacrylate, ethyl methacrylate, benzyl methacrylate, glycidyl methacrylate, 2-hydroxyethyl methacrylate, acrylic acid, or methacrylic acid, that forms a hard polymer when homopolymerized, can also be used if the amount of use is controlled so as to form a rubber-like polymer by copolymerization with the other components (A), (B), and (C). Among these, in view of availability of the resulting (meth)acrylic rubber and economics, an alkyl (meth) acrylate containing an alkyl group having 2 to 18 carbon atoms is preferred, and n-butyl acrylate is more preferred. These compounds (A) may be used alone or in combination of two or more.

The compound (B) is a component that enables graft copolymerization of a rubber-like polymer constituting a core and a hard polymer constituting a shell. In a part of the compound (B), only one of the radically polymerizable unsaturated groups per molecule is copolymerized with the compound (A) and the compound (C) to introduce an unreacted radically polymerizable unsaturated group in the (meth)acrylic rubber, thus enabling copolymerization with the hard polymer. In the rest of the compound (B), a plurality of radically-polymerizable unsaturated groups per molecule are allowed to react to introduce a crosslinking structure into the (meth)acrylic rubber.

Specific examples of the compound (B) include allyl methacrylate, allyl acrylate, diallyl phthalate, triallyl cyanurate, triallyl isocyanurate, ethylene glycol diacrylate, and ethylene glycol dicyclopentenyl ether methacrylate. These compounds (B) may be used alone or in combination of two or more. Among these, in view of satisfactory grafting efficiency with a polyolefin monomer, allyl methacrylate is preferred.

The compound (C) is a component for adjusting various physical properties, such as elastic modulus, Tg, and refractive index, of the (meth)acrylic rubber. As the compound (C), any monomer that is copolymerizable with the compound (A) and/or the compound (B) can be used without particular limitations. Such a monomer may be used alone or two or more monomers may be used in combination. Specific examples of the compound (C) include, but are not limited to, styrene, $\alpha$-methylstyrene, 1-vinylnaphthalene, 2-vinylnaphthalene, 1,3-butadiene, isoprene, chloroprene, acrylonitrile, methacrylonitrile, vinyl acetate, and vinyl ethyl ether.

The (meth)acrylic rubber is produced by conducting radical (co)polymerization by an ordinary emulsion polymerization method and can be obtained as a latex.

In the emulsion polymerization, the total amount of the starting materials may be fed at one time. Alternatively, after part of the starting materials is fed, the remaining portion may be added continuously or intermittently. Examples of the methods employable include a method in which any of the compound (A), the compound (B), and the compound (C), or a mixture of these is emulsified in advance with an emulsifier and water, and the resulting emulsion is then added; and a method in which separately from any of the compound (A), the compound (B), and the compound (C), or a mixture of these, an emulsifier, an aqueous solution of an emulsifier, or the like is added continuously or in divided portions.

The amount of water used in the emulsion polymerization is not particularly limited as long as it is sufficient for emulsifying the compound (A), the compound (B), and the compound (C). Usually, water is used in a weight of 1 to 20 times the total weight of the compound (A), the compound (B), and the compound (C).

Any known emulsifier can be used in the emulsion polymerization, and any one of anionic, cationic, and nonionic emulsifiers can be used without particular limitations. In view of good emulsifying ability, anionic emulsifiers, such as alkali metal salts of an alkylbenzene sulfonic acid, alkali metal salts of an alkylsulfuric acid, and alkali metal salts of an alkylsulfosuccinic acid, are preferred. The amount of use of the emulsifier is not particularly limited and may be appropriately adjusted depending on the average particle size of the desired (meth)acrylic rubber or the like. Preferably, the emulsifier is used in an amount of 0.1 to 10 parts by weight relative to 100 parts by weight of the monomers.

Furthermore, the average particle size of the (meth)acrylic rubber can be controlled by an ordinary emulsion polymerization technique, for example, by increasing or decreasing of the amount of emulsifier used. From the standpoint that a satisfactory dispersion state is exhibited when a polyolefin graft copolymer obtained after copolymerization is blended with a thermoplastic resin, the average particle size of the (meth)acrylic rubber is preferably in a range of 20 to 1,500 nm, more preferably 25 to 1,000 nm, and still more preferably 30 to 500 nm.

The polymerization initiator used in the emulsion polymerization is not particularly limited and any known initiator can be used. Examples of the initiator include persulfates, such as potassium persulfate and ammonium persulfate; alkyl hydroperoxides, such as tert-butyl hydroperoxide and cumene hydroperoxide; diacyl peroxides, such as benzoyl peroxide; dialkyl peroxides, such as di-tert-butyl peroxide and tert-butyl peroxylaurate; and azo compounds, such as 2,2'-azobisisobutyronitrile and 2,2'-azobis-2,4-dimethylvaleronitrile. Among these, persulfates and alkyl hydroperoxides are preferred. In addition to the use in a method involving thermal decomposition, these initiators can be used as a redox catalyst containing a polymerization initiator, an activator (a metal salt or a metal complex), a chelating agent, and a reducing agent.

The polymerization initiator may be used in a method involving thermal decomposition or a method using a redox catalyst. The method involving thermal decomposition is suitable for producing a polymer containing a small amount of metal ions because it is not necessary to use additives, such as a reducing agent and an activator. The method using a redox catalyst is advantageous in that a high reaction rate can be achieved even at a low reaction

temperature.

Preferred examples of the reducing agent constituting the redox catalyst include glucose, dextrose, sodium formaldehyde sulfoxylate, sodium sulfite, sodium bisulfite, sodium thiosulfate, ascorbic acid, and isoascorbic acid.

Examples of the chelating agent include polyaminocarboxylates, such as ethylenediaminediacetate; oxycarboxylic acids, such as citric acid; compounds that form water-soluble chelate compounds, such as condensed phosphates; and compounds that form oil-soluble chelate compounds, such as dimethylglyoxime, oxine, and dithizone. Among these, polyaminocarboxylates, such as ethylenediaminediacetate, and oxycarboxylic acids, such as citric acid, are preferred.

Examples of the activator include salts or chelates of metals, such as iron, copper, manganese, silver, platinum, vanadium, nickel, chromium, palladium, and cobalt. Preferred examples thereof include ferrous sulfate, copper sulfate, and potassium hexacyanoferrate (III). The activator and the chelating agent may be used as separate components. Alternatively, the activator and the chelating agent may be allowed to react with each other in advance and used as a metal complex.

The combination of the initiator, activator, reducing agent, and chelating agent is not particularly limited, and each component may be selected in any iinanner. Preferred examples of the combination of activator/reducing agent/chelating agent include ferrous sulfate/glucose/sodium pyrophosphate, ferrous sulfate/dextrose/sodium pyrophosphate, ferrous sulfate/sodium formaldehyde sulfoxylate/disodium ethylenediaminetetraacetate, ferrous sulfate/sodium formaldehyde sulfoxylate/citric acid, and copper sulfate/sodium formaldehyde sulfoxylate/citric acid. Particularly preferred examples of the combination include ferrous sulfate/sodium formaldehyde sulfoxylate/disodium ethylenediaminetetraacetate and ferrous sulfate/sodium formaldehyde sulfoxylate/citric acid. However, the combination is not limited thereto. The initiator is used preferably in an amount of 0.005 to 2 parts by weight, and more preferably 0.01 to 1 part by weight, relative to 100 parts by weight of a monomer. The chelating agent is used preferably in an amount of 0.005 to 5 parts by weight, and more preferably 0.01 to 3 parts by weight, relative to 100 parts by weight of a monomer. The activator is used preferably in an amount of 0.005 to 2 parts by weight, and more preferably 0.01 to 1 part by weight, relative to 100 parts by weight of a monomer. If the amounts of use are in the ranges described above, the rate of polymerization is sufficiently high and coloring and precipitation of the product can be suppressed, thus being preferable.

A chain transfer agent may be used in the emulsion polymerization according to need. The chain transfer agent is not particularly limited and any known chain transfer agent can be used. Specific examples thereof include tert-dodecylmercaptan, n-dodecylmercaptan, n-octylmercaptan, and n-hexylmercaptan.

The reaction temperature during the emulsion polymerization is not particularly limited, but is preferably 0°C to 100°C, and more preferably 30°C to 95°C. The reaction time is also not particularly limited. The reaction time is usually 10 minutes to 24 hours, preferably 30 minutes to 12 hours, and more preferably 1 hour to 6 hours.

A silicone rubber, which is another preferred example of a polymer constituting the rubber-like polymer core, is preferably a silicone rubber produced by allowing an organosiloxane (hereinafter referred to as compound (D)) to react with a monomer (hereinafter referred to as compound (E)) having a functional group reactive with the compound (D) and a radically polymerizable unsaturated group per molecule. The silicone rubber may also include a compound (hereinafter referred to as compound (F)) having a functional group reactive with the compound (D) and/or the compound (E) as necessary. Each component may be used in any amount without particular limitations. The compound (D) is used preferably in an amount of 50% to 99.99% by weight, and more preferably 75% to 99.90% by weight. As the amount of use increases, the increase in elastic modulus when the resulting polyolefin graft polymer is added to a thermoplastic resin can be suppressed more reliably. The compound (E) is used preferably in an amount of 0.01% to 25% by weight, and more preferably 0.1% to 10% by weight. When the amount of use is in this range, the grafting efficiency of the rubber-like polymer and the hard polymer is particularly satisfactory. When the compound (F) is used, the amount of use of the compound (F) is preferably 0% to 50% by weight, and more preferably 0% to 25% by weight. Note that the total of the compound (D), the compound (E), and the compound (F) is 100% by weight.

The compound (D) is a component that constitutes the main skeleton of the silicone rubber. The compound (D) with any molecular weight can be used as long as the compound (D) is a liquid that can be subjected to emulsion polymerization. The molecular weight of the compound (D) is preferably 1,000 or less, and particularly preferably 500 or less. The compound (D) may have a linear, cyclic, or branched structure. Use of a cyclic siloxane is preferred in view of economics of the emulsion polymerization system. Specific examples of the cyclic siloxane include hexamethylcyclotrisiloxane, octamethylcyclotetrasiloxane, decamethylcyclopentasiloxane, dodecamethylcyclohexasiloxane, tetramethyltetraphenylcyclotetrasiloxane, octaphenylcyclotetrasiloxane, and 1,2,3,4-tetrahydro-1,2,3,4-tetramethylcyclotetrasiloxane. A bifunctional alkoxysilane can also be used as the compound (D). Specific examples thereof include dimethoxydimethylsilane and diethoxydimethylsilane. Furthermore, a cyclic siloxane and a bifunctional alkoxysilane may be used in combination. These compounds (D) may be used alone or in combination of two or more.

The compound (E), by its functional group, is allowed to react with the compound (D). As a result, a radically polymerizable unsaturated group can be introduced to a side chain or a terminus of the resulting silicone rubber. This radically polymerizable unsaturated group is a component that enables graft copolymerization of the silicone rubber with

a hard polymer shell. Preferable examples of the group for reacting with the compound (D) include hydrolyzable alkoxy groups bonded to a silicon atom, silanol groups, or a group having a cyclic siloxane structure that can be subjected to ring-opening copolymerization with the compound (D). Specific examples of the compound (E) include alkoxysilane compounds, such as 3-(meth) acryloxypropylmethyldimethoxysilane, 3-(meth)acryloxypropyltrimethoxysilane, 3-(meth) acryloxypropylmethyldiethoxysilane, and 3-(meth) acryloxypropyltriethoxysilane; and organosiloxanes, such as 1,3,5,7-tetrakis((meth)acryloxypropyl)-1,3,5,7-tetramethylcyclotetrasiloxane, and 1,3,5-tris((meth)acryloxypropyl)-1,3,5-trimethylcyclotrisiloxane. Among these, 3-(meth)acryloxypropylmethyldimethoxysilane is particularly preferred in view of good reactivity. These compounds (E) may be used alone or in combination of two or more.

The compound (F) is a component that reacts with the compound (D) and/or the compound (E) to adjust physical properties of the silicone rubber. For example, when a polyfunctional silane compound having at least three hydrolyzable groups bonded to a silicon atom per molecule or a partial hydrolysis condensate thereof is used, Tg, elastic modulus, and the like can be adjusted by introducing a crosslinked structure in the silicone rubber. Specific examples of the polyfunctional silane compound include alkoxysilanes, such as methyltrimethoxysilane, ethyltrimethoxysilane, methyltri (methoXyethoxy)silane, tetramethoxysilane, tetraethoxysilane, methyltriethoxysilarie, and ethyltriethoxysilane; hydrolysis condensates thereof; acetoxysilanes, such as methyltriacetoxysilane, ethyltriacetoxysilane, and tetraacetoxysilane; and hydrolysis condensates thereof. These compounds (F) may be used alone or in combination of two or more.

The silicone rubber can be produced by an ordinary polymerization method conducted under an acidic or a basic condition. For example, the compound (D) and the compound (E), and as necessary, the compound (F) are formed into emulsion together with an emulsifier and water using a homomixer, a colloid mill, a homogenizer, or the like. The pH of the system is then adjusted to 2 to 4 with an alkylbenzene sulfonic acid, sulfuric acid, or the like, and the compounds are polymerized by heating. Subsequently, the resulting product is neutralized by adding an alkaline component, such as sodium hydroxide or potassium hydroxide. Thereby, the silicone rubber is produced.

All the starting materials may be added at one time and stirred for a predetermined period of time, and then the pH may be reduced. Alternatively, part of the starting materials may be fed to prepare emulsion with a reduced pH, and the remaining portion of the starting materials may be sequentially added to the emulsion. When the sequential addition is performed, the starting materials may be added directly, or the starting materials may be mixed with water and an emulsifier to prepare emulsion in advance and the emulsion may then be added. In view of the rate of polymerization, the method of adding in an emulsion form is preferably employed. The reaction temperature and time are not particularly limited. In view of the ease of reaction control, the reaction temperature is preferably 0˚C to 100˚C, and more preferably 50˚C to 95˚C. The reaction time is preferably 1 to 100 hours, and more preferably 5 to 50 hours.

When the polymerization is performed under an acidic condition, Si-O-Si bonds constituting the skeleton of polyorganosiloxane are usually in equilibrium between breakage and generation of bonds. This equilibrium changes depending on the temperature, and a polyorganosiloxane having a high molecular weight is more easily produced at lower temperature. Therefore, in order to obtain a polyorganosiloxane having a high molecular weight, after the compound (D) is polymerized by heating, preferably, the product is cooled to the polymerization temperature or lower and aged. Specifically, polymerization is conducted at 50˚C or higher. When the polymerization conversion ratio reaches 75% to 90%, and more preferably 82% to 89%, the heating is stopped. The temperature is then decreased to 10˚C to 50˚C and preferably 20˚C to 45˚C and aging is performed for about 5 to about 100 hours. Herein, the term "polymerization conversion ratio" means the conversion ratio of the compound (D), the compound (E), and, in some cases, the compound (F) in the starting materials to a low volatile component.

The amount of water used in the emulsion polymerization is not particularly limited as long as it is sufficient for emulsifying and dispersing the compound (D), the compound (E), and the compound (F). Usually, water is used in a weight of 1 to 20 times the total weight of the compound (D), the compound (E), and the compound (F).

The emulsifier used in the emulsion polymerization is not particularly limited and any known emulsifier can be used as long as it does not lose emulsifying ability in the pH range in which the reaction is performed. Examples of the emulsifier include alkylbenzene sulfonic acids, sodium alkylbenzene sulfonates, sodium alkylsulfates, sodium alkylsulfosuccinates, and sodium polyoxyethylene nonylphenyl ether sulfonate. The amount of use of the emulsifier is not particularly limited and may be appropriately adjusted depending on the average particle size of the desired silicone rubber or the like. From the standpoint that satisfactory emulsifying ability can be obtained and physical properties of the resulting silicone rubber and the polyolefin graft copolymer produced therefrom are not adversely affected, the emulsifier is used preferably in an amount of 0.05% to 20% by weight, and particularly preferably 0.1% to 10% by weight in the emulsion. The average particle size of the silicone rubber can be controlled by an ordinary emulsion polymerization technique, for example, by increasing or decreasing the amount of the emulsifier used. In view of satisfactory dispersibility of the polyolefin graft copolymer produced after copolymerization in a thermoplastic resin, the particle size of the silicone rubber is preferably in a range of 20 to 1,500 nm, more preferably 25 to 1,000 nm, and still more preferably 30 to 500 nm.

Examples of the polymer constituting the hard polymer shell include polyvinylcyanide, polyaromatic vinyl, poly (alkyl (meth)acrylates), and maleimide polymers. Among these, poly(alkyl (meth)acrylates) are preferred.

A poly(alkyl (meth)acrylate), which is a preferred example of the polymer constituting the hard polymer, is

preferably a hard polymer produced by copolymerizing a (meth)acrylic monomer (G) (hereinafter referred to as compound (G)) and a monomer (H) (hereinafter referred to as compound (H)) having at least one radically polymerizable unsaturated group and at least one group copolymerizable with an olefin monomer per molecule. The poly(alkyl (meth)acrylate) may also include a monomer (I) (hereinafter referred to as compound (I)) copolymerizable with the compound (G) and/or the compound (G) as necessary. Each component may be used in any amount without particular limitations. The compound (G) is used preferably in an amount of 50% to 99.99% by weight, and more preferably 75% to 99.9% by weight. As the amount increases, handleabilities of the resulting macromonomer and a copolymer obtained by grafting an olefin thereto improve. The compound (H) is used preferably in an amount of 0.01% to 25% by weight, and more preferably 0.1% to 10% by weight. When the amount of use is in this range, grafting efficiency with an olefin monomer and low elastic modulus are particularly satisfactory. The compound (I) is used preferably in an amount of 0% to 50% by weight, and more preferably 0% to 25% by weight. Note that the total of the compound (G), the compound (H), and the compound (I) is 100% by weight.

The compound (G) is a component that constitutes the main skeleton of the poly(alkyl (meth)acrylate) and improves the handleability of the resulting macromonomer and a copolymer obtained by grafting an olefin thereto. Specific examples of the compound (G) include, but are not limited to, (meth)acrylates, such as tert-butyl acrylate, hexadecyl acrylate, phenyl acrylate, methyl methacrylate, ethyl methacrylate, benzyl methacrylate, glycidyl methacrylate, and 2-hydroxyethyl methacrylate; (meth)acrylic acids, such as acrylic acid and methacrylic acid; acid anhydrides thereof; and metal salts thereof. Among these, in view of availability of the resulting hard polymer and economics, alkyl (meth) acrylates containing an alkyl group having 2 to 18 carbon atoms are preferred, and tert-butyl acrylate, methyl methacrylate, and glycidyl methacrylate are more preferred. These compounds (G) may be used alone or in combination of two or more. A monomer, such as methyl acrylate, ethyl acrylate, propyl acrylate, n-butyl acrylate, 2-ethylhexyl acrylate, 2-ethylhexyl methacrylate, or lauryl methacrylate, that forms a rubber-like polymer when homopolymerized, can also be used if the amount of use is controlled so as to form a hard polymer by copolymerization with the other components (G), (H), and (I). The compound (H) is a component that is copolymerized, by its radically polymerizable unsaturated group, with the compound (G) and in some cases, the compound (I) to produce a copolymer, resulting in the introduction of a group copolymerizable with an olefin monomer into a macromonomer having a multilayer structure, thus enabling graft copolymerization of the copolymer and an olefin monomer. The group copolymerizable with an olefin monomer may be any functional group and is not particularly limited. In view of high reactivity of coordination polymerization, a functional group having an allyl terminus, a cyclic olefin terminus, a styryl terminus, or a (meth)acrylic terminus is preferred. In particular, a functional group having a (meth)acrylic terminus, an allyl terminus, or a dicyclopentenyl terminus is preferred.

When the group copolymerizable with an olefin monomer has both radical polymerizability and coordination polymerizability, the radically polymerizable unsaturated group and the group copolymerizable with an olefin monomer possessed by the component (H) may be the same or different. When the two groups are the same, the component (H) contains two or more radically polymerizable unsaturated groups (which are also groups copolymerizable with an olefin monomer) per molecule. However, during the synthesis of a (meth)acrylic hard shell, the reaction is terminated when only a part of the radically polymerizable unsaturated groups is subjected to radical polymerization, and thus the reaction can be controlled such that unreacted radically polymerizable unsaturated groups (which are also groups copolymerizable with an olefin monomer) remain in the resulting macromonomer.

Specific examples of the compound (H) include allyl methacrylate, allyl acrylate, diallyl phthalate, triallyl cyanurate, triallyl isocyanurate, ethylene glycol diacrylate, and ethylene glycol dicyclopentenyl ether methacrylate. These compounds (H) may be used alone or in combination of two or more. Among these, in view of satisfactory grafting efficiency with an olefin monomer, allyl methacrylate is preferred.

The compound (I) is a component for adjusting various physical properties, such as elastic modulus, Tg, and refractive index, of the poly(meth)acrylic hard shell. Preferred examples thereof are the same as those of the compound (C) in the (meth)acrylic rubber.

The poly(alkyl (meth) acrylate) can be produced by the same method as that for the (meth)acrylic rubber. A latex of a rubber-like polymer, the compound (G), the compound (H), the compound (I) as required, a polymerization initiator, an emulsifier, a chain transfer agent, etc. are mixed and polymerization is performed. Thereby, a macromonomer having a multilayer structure can be obtained.

Known polymerization initiators, emulsifiers, chain transfer agents, and the like may be used in the emulsion polymerization. Those described as preferred examples in the above process for producing the (meth)acrylic rubber can be preferably used. The polymerization initiator may be used in a method involving thermal decomposition or a method using a redox catalyst. From the standpoint that handleability can be further improved, preferably, the hard polymer is polymerized using a redox polymerization initiator.

The catalyst for producing the polyolefin graft copolymer of the present invention will now be described.

In the present invention, a coordination polymerization catalyst is used as the catalyst for producing a polyolefin graft copolymer. The coordination polymerization catalyst is a catalyst that accelerates coordination polymerization. As the coordination polymerization catalyst used in the present invention, any coordination polymerization catalyst that has

olefin polymerization activity in the presence of water and a polar compound can be used without particular limitations. Preferred examples thereof include, but are not limited to, catalysts described in Chemical Review, 2000, Vol. 100, pp. 1169-1203; Chemical Review, 2003, Vol. 103, pp. 283-315; Journal of Synthetic Organic Chemistry, Japan, 2000, Vol. 58, p. 293; Angewandte Chemie International Edition, 2002, Vol. 41, pp. 544-561; Macromolecules, 2003, Vol. 36, pp. 6711-6715; WO97/17380; and WO97/48740. In view of good reactivity, the coordination polymerization catalyst is preferably a complex containing a ligand having two imine nitrogen atoms and a late transition metal selected from Groups 8 to 10 in the periodic table, and more preferably, a complex containing an α-diimine ligand and a late transition metal selected from Group 10 in the periodic table. Particularly preferably, after reaction with a co-catalyst, a species (active species) having a structure represented by general formula (1) or (2) below is suitably used.

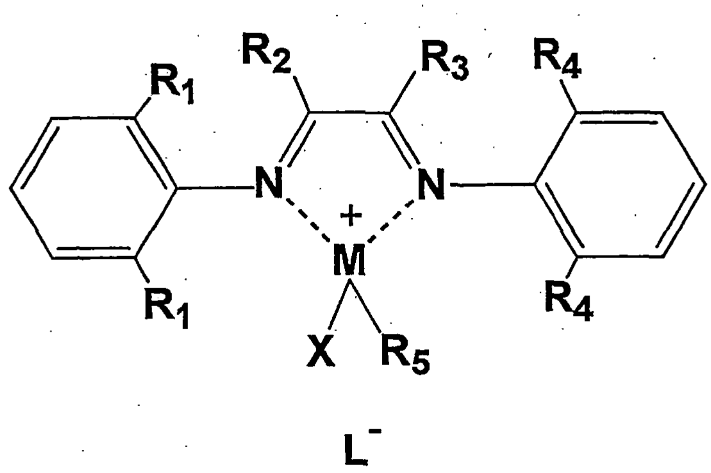

(1)

(wherein M represents palladium or nickel; $R_1$ and $R_4$ each independently represent a hydrocarbon group having 1 to 4 carbon atoms; $R_2$ and $R_3$ each independently represent a hydrogen atom or a methyl group; $R_5$ represents a halogen atom, a hydrogen atom, or an organic group having 1 to 20 carbon atoms; X represents an organic group containing a heteroatom capable of coordinating to M, and X may be bonded to $R_5$ or may not be present; and $L^-$ represents an anion);

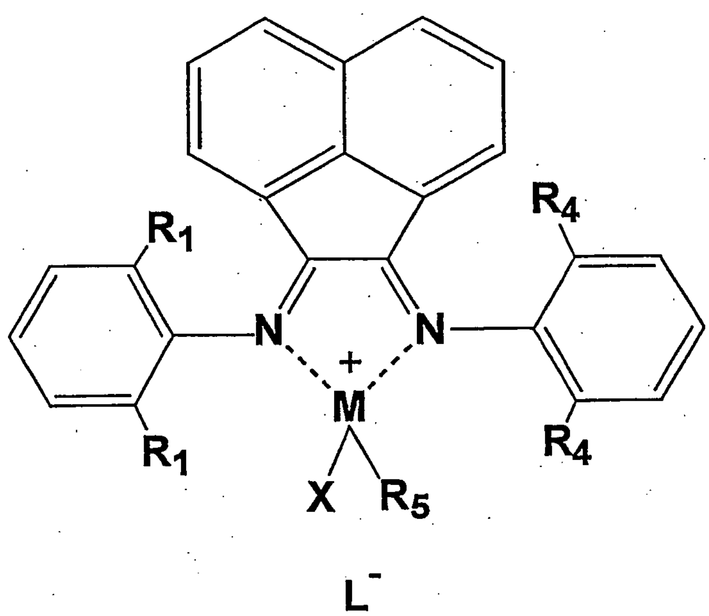

(2)

(wherein M represents palladium or nickel; $R_1$ and $R_4$ each independently represent a hydrocarbon group having 1 to 4 carbon atoms; $R_5$ represents a halogen atom, a hydrogen atom, or an organic group having 1 to 20 carbon atoms; X represents an organic group containing a heteroatom capable of coordinating to M, and X may be bonded to $R_5$ or

may not be present; and $L^-$ represents an anion).

The hydrocarbon group having 1 to 4 carbon atoms and represented by $R_1$ or $R_4$ is preferably a methyl group, an ethyl group, an isopropyl group, a tert-butyl group, an n-butyl group, or the like, and more preferably a methyl group or an isopropyl group.

Examples of the molecule represented by X capable of coordinating to M include polar compounds, such as diethyl ether, acetone, methyl ethyl ketone, acetaldehyde, acetic acid, ethyl acetate, water, ethanol, acetonitrile, tetrahydrofuran, dimethylformamide, dimethyl sulfoxide, and propylene carbonate. X may not be present. When $R_5$ has a heteroatom, in particular, a carbonyl oxygen of an ester bond or the like, the carbonyl oxygen may coordinate as X. It is also known that, in the polymerization with an olefin, the olefin coordinates.

The counter anion represented by $L^-$, which is generated together with the cation ($M^+$) by reaction of a catalyst containing an α-diimine ligand and a transition metal with a co-catalyst, may be any anion that can form a non-coordinating ion pair in solvents.

α-Diimine ligands in which each of the imine nitrogen atoms is bonded to an aromatic group, namely, compounds represented by $ArN=C(R_2)C(R_3)=NAr$ are preferred because these compounds can be readily synthesized and have high activity. Each of $R_2$ and $R_3$ is preferably a hydrocarbon group. In particular, compounds wherein each of $R_2$ and $R_3$ is a hydrogen atom or a methyl group or $R_2$ and $R_3$ form an acenaphthene skeleton represented by general formula (2) are preferred because these compounds can be readily synthesized and have high activity. Furthermore, α-diimine ligands in which each of the imine nitrogen atoms is bonded to a substituted aromatic group are preferably used because the use of such compounds is effective in terms of the steric factor and the molecular weight of the polymer tends to increase. Consequently, Ar is preferably an aromatic group having a substituent, for example, 2-,6-dimethylphenyl or 2,6-diisopropylphenyl.

The auxiliary ligand ($R_5$) in the active species obtained, from the late transition metal complex of the present invention is preferably a hydrocarbon group, a halogen group, or a hydrogen group. The reason for this is as follows: A cation ($Q^+$) of a co-catalyst, which will be described below, abstracts a halogen or the like from a metal-halogen bond, a metal-hydrogen bond, or a hydrogen-carbon bond of a catalyst to produce a salt. On the other hand, a cation ($M^+$), i.e., an active species, having a metal-carbon bond, a metal-halogen bond, or a metal-hydrogen bond is produced from the catalyst, and the cation ($M^+$) must form a non-coordinating ion pair with the anion ($L^-$) of the co-catalyst. Specific examples of $R_5$ include a methyl group, a chloro group, a bromo group, and a hydrogen group. A methyl group or a chloro group is particularly preferred because the synthesis can be readily performed. A methyl group is particularly preferable as the auxiliary ligand $R_5$ of the catalyst because insertion of an olefin into an $M^+$-carbon bond (or hydrogen bond) occurs more easily, compared with insertion of an olefin into an $M^+$-halogen bond.

Furthermore, $R_5$ may be an organic group containing an ester bond having a carbonyl oxygen capable of coordinating to M. An example thereof is a group obtained from methyl butyrate.

The co-catalyst can be expressed as $Q^+L^-$. Q may be Ag, Li, Na, K, or H. Ag is preferred because halogen abstraction reaction is easily completed. Inexpensive Na and K are also preferred. L may be $BF_4$, $B(C_6F_5)_4$, $B(C_6H_3(CF_3)_2)_4$, $PF_6$, $AsF_6$, $SbF_6$, $(RfSO_2)_2CH$, $(RfSO_2)_3C$, $(RfSO_2)_2N$, or $RfSO_3$. In particular, $PF_6$, $AsF_6$, $SbF_6$, $(RfSO_2)_2CH$, $(RfSO_2)_3C$, $(RfSO_2)_2N$, and $RfSO_3$ are preferred since they tend to be stable toward polar compounds. Furthermore, in view of the simple synthesis and industrial availability, $PF_6$, $AsF_6$, and $SbF_6$ are particularly preferred. In view of high activity, $BF_4$, $B(C_6F_5)_4$, and $B(C_6H_3(CF_3)_2)_4$ are preferred, and in particular, $B(C_6F_5)_4$ and $B(C_6H_3(CF_3)_2)_4$ are preferred. Rf represents a hydrocarbon group having a plurality of fluorine groups. These fluorine groups are necessary in order to allow the anion to be non-coordinating, and preferably, the number of the fluorine groups is as large as possible. Examples of Rf include, but are not limited to, $CF_3$, $C_2F_5$, $C_4F_9$, $C_8F_{17}$, and $C_6F_5$. Some of these may be combined.

Because of the activation described above, the molar ratio of late transition metal complex-based catalyst/co-catalyst is 1/0.1 to 1/10, preferably 1/0.5 to 1/2, and particularly preferably 1/0.75 to 1/1.25.

The olefin monomer used in the present invention is an olefin compound that has a coordination-polymerizable carbon-carbon double bond.

Preferred examples of the olefin monomer include olefins having 2 to 20 carbon atoms, such as ethylene, propylene, 1-butene, 1-hexene, 1-octene, 1-decene, 1-hexadecene, 1-eicosene, 4-methyl-1-pentene, 3-methyl-1-butene, vinylcyclohexane, cyclopentene, cyclohexene, cyclooctene, norbornene, and 5-phenyl-2-norbornene. Among these, α-olefins (olefin compounds having a terminal carbon-carbon double bond), in particular, α-olefins having 10 or less carbon atoms are preferred in view of high polymerization activity. Examples thereof include ethylene, propylene, 1-butene, 1-hexene, and 1-octene. These olefin monomers may be used alone or in combination of two or more.

Furthermore, a small amount of diene, such as 1,3-butadiene, isoprene, 1,4-hexadiene, 3,5-dimethyl-1,5-hexadiene, 1,13-tetradecadiene, 1,5-cyclooctadiene, norbornadiene, 5-vinyl-2-norbornene, ethylidene norbornene, 5-phenyl-2-norbornene, dimethanooctahydronaphthalene, or dicyclopentadiene, may be combined. The diene is used preferably in an amount of 0 to 10 parts by weight, and more preferably 0.1 to 2 parts by weight, relative to 100 parts by weight of the olefin monomer.

The amount of use of the olefin monomer is not limited. From the standpoint that a polymer having a high

molecular weight can be produced in high yield, the molar ratio of olefin monomer/active species is preferably 10 to $10^9$, more preferably 100 to $10^7$ and particularly preferably 1,000 to $10^5$.

A method for producing a graft copolymer of the present invention will now be described.

The polyolefin graft copolymer of the present invention is produced by a method in which a macromonomer having a multilayer structure, an olefin monomer, and a coordination polymerization catalyst are dispersed in water and copolymerization is performed under emulsion polymerization conditions or conditions similar to emulsion polymerization conditions.

The order and method of feeding water, the macromonomer having a multilayer structure, the olefin monomer, and the catalyst are not particularly limited. As necessary, additives, such as an emulsifier and an organic solvent, may be added. For example, the reaction may be conducted by homogeneously dispersing a coordination polymerization catalyst and an olefin monomer in a latex of a macromonomer having a multilayer structure. When the olefin monomer to be used is gaseous at the reaction temperature, the olefin monomer may be fed as a gas to the system, or the olefin monomer may be condensed or solidified at low temperature and then fed as a liquid or a solid to the system, followed by heating the system to the reaction temperature. All the macromonomer having a multilayer structure, the olefin monomer, and the coordination polymerization catalyst may be fed to the reactor at one time. Alternatively, after part of these materials is fed to the reactor, the remaining portion may be continuously or intermittently added to the system. These materials may be fed directly or may be emulsified with water and an emulsifier, and then the emulsion may be fed.

The ratio between the macromonomer having a multilayer structure and the olefin monomer used can be set freely. The olefin monomer is preferably used in an amount of 1 to 100 parts by weight, and more preferably 2 to 33 parts by weight, relative to 100 parts by weight of the macromonomer used. When the olefin monomer is a volatile liquid with a boiling point of 100˚C or lower or a gas, a largely excessive amount of the olefin monomer may be used, and the reaction may be terminated at the point where the monomer in the preferable amount is polymerized, followed by removal of the unreacted monomer.

During the polymerization, in order that the solubility of the olefin monomer and the coordination polymerization catalyst is improved to accelerate the reaction, a small amount of an organic solvent may be added. The solvent is not particularly limited, but is preferably an aliphatic or aromatic solvent, which may be halogenated. Examples of the solvent include toluene, ethylbenzene, xylene, chlorobenzene, dichlorobenzene, pentane, hexane, heptane, cyclohexane, methylcyclohexane, ethylcyclohexane, butyl chloride, methylene chloride, and chloroform. The solvent may be a polar solvent, such as tetrahydrofuran, dioxane, diethyl ether, acetone, ethanol, methanol, methyl ethyl ketone, methyl isobutyl ketone, or ethyl acetate. Solvents which have low solubility with respect to water, which are relatively easily impregnated in the macromonomer having a multilayer structure used, and which easily dissolve catalysts are particularly preferred. Examples of such particularly preferred solvents include methylene chloride, chloroform, chlorobenzene, and butyl chloride.

These solvents may be used alone or in combination of two or more. The total amount of the solvent used is preferably 30% by volume or less, and more preferably 10% by volume or less, relative to the total volume of the reaction solution. Alternatively, the total amount of the solvent is preferably 150 parts by weight or less, and more preferably 50 parts by weight or less, relative to 100 parts by weight of the macromonomer having a multilayer structure used. From the standpoint that the rate of reaction is further improved, the amount of the solvent used is preferably large. From the standpoint that a homogeneous reaction system can be easily maintained, the amount of solvent used is preferably small.

The reaction temperature, pressure, and time in the production of the graft copolymer of the present invention may be selected freely depending on the boiling points of the starting materials used and the reaction rate. Although not particularly limited, from the standpoints that the reaction can be easily controlled and the production cost is reduced, the reaction temperature is preferably 0˚C to 100˚C, more preferably 10˚C to 95˚C, and particularly preferably 30˚C to 95˚C. The reaction pressure is preferably 0.05 to 10 MPa, and more preferably 0.1 to 3 MPa. The reaction time is preferably 10 minutes to 100 hours, and more preferably 0.5 to 50 hours. The temperature and the pressure may be kept constant from the initiation to the termination of the reaction or may be changed continuously or stepwise in the course of the reaction. When the olefin monomer used is a gas, the pressure can decrease gradually as the olefin monomer is consumed by polymerization reaction. In such a case, the reaction may be conducted while allowing the pressure to be changed. Alternatively, the reaction may be conducted while maintaining a constant pressure by supplying the olefin monomer according to the amount consumed or by heating.

The polyolefin graft copolymer according to the present invention is usually obtained as a latex. The particle size of the resulting latex depends on the particle size of the macromonomer used as a starting material and the amount of the reacted olefin monomer. In view of particularly excellent dispersibility in a thermoplastic, conditions are selected so that the particle size is preferably 20 to 1,500 nm, more preferably 25 to 1,000 nm, and still more preferably 30 to 500 nm. Depending on the reaction conditions, some of latex particles are aggregated and precipitated, or free polyolefin which is formed as a byproduct is precipitated. The reaction is preferably conducted under conditions that do not produce such precipitates.

The latex thus obtained containing the polyolefin graft copolymer of the present invention may be used as it is. Alternatively, additives may be added to the latex, or the latex may be blended with another latex. The latex may be

used after treatment, such as dilution, concentration, heat treatment, or deaeration treatment. The latex may be applied onto a substrate composed of a plastic, a metal, wood, glass, or the like to be used as a coating agent, a paint, a surface treatment agent, or the like. Furthermore, the latex may be impregnated into a fiber, paper, a cloth, a carbon fiber, glass wool, or the like to be used as a modifier, a curing agent, or the like. The latex may also be used as a material for fiber-reinforced plastics or cast films.

A latex containing the polyolefin graft copolymer of the present invention may be dehydrated to isolate the solid component and the isolated solid component can be used for various applications. Examples of the method for isolating the solid component from the latex include, but are not limited to, a method (salting-out).in which aggregation is performed by addition of an electrolyte, such as calcium chloride, magnesium chloride, calcium sulfate, magnesium sulfate, aluminum sulfate, or calcium formate; a method in which aggregation is performed by mixing with a hydrophilic organic solvent such as methanol; a method in which the solid component is aggregated by a mechanical operation, such as ultrasonic treatment, high-speed stirring, or centrifugal separation; and a method in which moisture is removed by a drying operation, such as spray drying, heat drying, freeze drying, or reduced pressure drying. A washing operation with water and/or an organic solvent may also be performed in any stage during a series of steps of isolating the polyolefin graft copolymer of the present invention from the latex.

The polyolefin graft copolymer of the present invention can be isolated in a powder form or block form by aggregating the solid component of the latex or by drying the solid component to remove moisture. The dry product may be pelletized with an extruder, a Banbury mixer, or the like. A hydrated (solvent-containing) resin obtained by dehydrating (removing a solvent from) the aggregated product may be pelletized with a compressing dehydrator and the pellets may be isolated. In view of high handleability, the copolymer is preferably isolated in a powder form.

By blending the polyolefin graft copolymer of the present invention with any of various thermoplastic resins, a thermoplastic resin composition of the present invention can be produced.

Preferred examples of the thermoplastic resin include resins that are commonly used, namely, polyolefins, such as polypropylene, polyethylene, ethylene propylene rubber, ethylene propylene diene rubber, ethylene octene rubber, polymethylpentene, ethylene-cyclic olefin copolymers, ethylene-vinyl acetate copolymers, ethylene-glycidyl methacrylate copolymers, and ethylene-methyl methacrylate copolymers; vinyl polymers, such as polyvinyl chloride, polystyrene, poly(methyl methacrylate), methyl methacrylate-styrene copolymers, styrene-acrylonitrile copolymers, styrene-acrylonitrile-N-phenylmaleimide copolymers, and α-methylstyrene-acrylonitrile copolymers; and engineering plastics, such as polyesters, polycarbonates, polyamides, polyphenylene ether-polystyrene complexes, polyacetals, polyether ether ketones, and polyethersulfones. These thermoplastic resins may be used alone or in combination of two or more. Among these, polyolefins, such as polyethylene and polypropylene, are preferred from the standpoint that the dispersibility of the polyolefin graft copolymer of the present invention is high.

The blending ratio between the thermoplastic resin and the graft copolymer may be appropriately determined so that the resulting molded object has well-balanced physical properties. In order to achieve satisfactory physical properties, the amount of the graft copolymer is preferably 0.1 parts or more, and more preferably 5 parts or more, relative to 100 parts of the thermoplastic resin. In order to maintain the characteristics of the thermoplastic resin, the amount of the graft copolymer is preferably 500 parts or less, and more preferably 100 parts or less, relative to 100 parts of the thermoplastic resin.

Since the polyolefin graft copolymer of the present invention contains the polyolefin component, the copolymer exhibits high dispersibility even in resins having low polarity, such as polyethylene and polypropylene. In addition, various functions derived from a functional group contained in a macromonomer can be imparted.

Furthermore, the thermoplastic resin composition containing the graft copolymer of the present invention may include general additives known in the plastic and rubber industry, for example, compounding agents, such as a plasticizer, a stabilizer, a lubricant, an ultraviolet absorber, an antioxidant, a flame retardant, a flame retardant assistant, a pigment, a glass fiber, a filler, and a polymer processing aid.

As the method for producing the thermoplastic resin composition containing the graft copolymer of the present invention, a method that is used for blending ordinary thermoplastic resins can be employed. For example, the composition can be produced by melt-kneading the thermoplastic resin, the graft copolymer of the present invention, and as required, additives using a heating kneader, such as a single-screw extruder, a twin-screw extruder, a roller mill, a Banbury mixer, a Brabender, a kneader, or a high-shear mixer. The order of kneading of the components is not particularly limited and may be determined according to the apparatus used, workability, or the physical properties of the resulting thermoplastic resin composition.

When the thermoplastic resin is produced by emulsion polymerization, the thermoplastic resin and the graft copolymer may be blended both in a latex form and the resultant mixture may then be coprecipitated (coaggregated), thus obtaining the thermoplastic resin composition.

Examples of the method for molding the thermoplastic resin composition containing the graft copolymer produced as described above include methods that are used for molding general thermoplastic resin compositions, such as injection molding, extrusion molding, blow molding, and calender molding.

(Examples)

The present invention will be described in more detail based on examples, but the present invention is not limited thereto.

In the following synthesis examples, examples, and comparative examples, the physical properties and characteristics were measured by the respective methods described below.

[Average particle size]

The particle size was measured by the dynamic light scattering method using a NICOMP Submicron Particle Sizer Model 370, and the volume average particle size was obtained. As samples to be measured, samples each obtained by diluting a latex with pure water were used.

[Gel content]

A sample in an amount of about 100 mg was placed in a 300 mesh net bag made of stainless steel and immersed in 100 mL of toluene at room temperature for 24 hours or more. Then, the sample was dried under reduced pressure at room temperature for 4 hours or more, and the weight of the toluene-insoluble component in the sample was measured. The gel content was determined according to the following expression: Gel content (% by weight) = {(dry weight of toluene-insoluble component)/(weight before immersion in toluene)} x 100

[Polymerization conversion ratio]

The total weight of the monomer, macromonomer, emulsifier, and initiator fed in the emulsion polymerization was divided by the weight of the entire reaction solution, and thus the maximum solid concentration in the case where 100% of the monomer was polymerized was obtained. About 0.5 to 2 g of a latex obtained after the reaction was placed in an ointment can and dried by heating in an oven at 100°C. The ratio of the remaining solid was determined, and this ratio was considered as the solid concentration in the latex. The drying by heating was conducted (usually for 30 minutes to 2 hours) until the change in weight was 1% or less even with further heating for 30 minutes or more. The polymerization conversion ratio was calculated according to the following expression:

Polymerization conversion ratio (% by weight) = {(solid concentration in latex)/(maximum solid concentration)} x 100

[$^1$H NMR spectrum]

An aqueous solution of calcium chloride was added to a graft copolymer latex to perform salting-out, followed by water washing and drying. The resulting resin in an amount of about 10 mg was dissolved in about 1 mL of deuterated chloroform (manufactured by Aldrich), and measurement was performed with a 300 MHz NMR apparatus (Varian Gemini 300).

[Powder flowability]

A sample in an amount of about 1 g was placed on a sieve according to JIS-Z8801 (wire diameter 1.66 mm, opening of sieve mesh 5.60 mm) and shaken horizontally by hand for 30 seconds. The percentage of the sample that passed through the sieve was measured. A higher percentage indicates better handleability.

[Tensile properties]

A composition prepared by blending a graft copolymer with a polypropylene was formed into a pressed sheet with a thickness of about 0.7 mm, and three No. 2(1/3) test pieces according to JIS-K7113 Appendix 1 were punched out therefrom. Using an autograph (AUTOGRAPH AG-2000A manufactured by Shimadzu Corp.), tensile testing was performed according to JIS-K7113 at a tensile testing speed of 1.0 mm/min, and the elastic modulus was measured. Furthermore, tensile testing was performed at a tensile testing speed of 16.66 mm/min, and the maximum stress (tensile strength) and the maximum elongation were measured. The averages of the three test pieces were used for evaluation.

In the composition having low dispersibility in resins, cracking easily occurs from the interface between the polypropylene and the resin to cause cutting. Therefore, the maximum elongation was considered as an index of dispersibility.

[Surface wettability]

Using a pressed sheet with a thickness of about 0.7 mm of a composition prepared by blending any of various copolymers with a polypropylene, surface tension was measured according to JIS-K6768. Measurement was performed at six positions per test piece, and an average thereof was used as an index of surface wettability. Higher surface wettability can be considered to indicate that the polarity on the sheet surface is higher.

(Reference Example 1) Synthesis of vinylidene-terminated polypropylene macromonomer

After a 300 mL-autoclave made of stainless steel was dried, 84 mL of dry toluene (manufactured by Wako Pure Chemical) was placed therein in a nitrogen atmosphere. After the autoclave was cooled to about -78˚C with a dry ice-methanol bath and set in a reduced pressure state with a vacuum pump, 24 L of propylene (manufactured by Sumitomo Seika Chemicals) dried with sodium hydroxide (manufactured by Wako Pure Chemical) and phosphorus pentaoxide (manufactured by Wako Pure Chemical) was introduced thereinto while being condensed. Subsequently, 15.9 mL of a toluene solution of methylaluminoxane (aluminum concentration 5.4%, manufactured by Tosoh Fine Chemical) and 0.99 mL of a toluene solution of zirconocene dichloride (manufactured by Aldrich) (20 mmol/L) were added thereto, and the temperature of the autoclave was raised to room temperature in a closed state. Stirring was performed at room temperature for 16 hours, and then the pressure was released. The mixture was poured into 50 mL hydrochloric acid (manufactured by Wako Pure Chemical)/500 mL methanol solution to terminate the polymerization. The precipitate was dried under reduced pressure and weighed (yield 38 g, number average molecular weight 2,200). The $^1$H NMR spectrum showed a proton peak of the terminal vinylidene at around 4.7 ppm.

(Reference Example 2) Synthesis of'methacryl-terminated polypropylene macromonomer

A 200-mL four-necked flask in which 6.15 g of the vinylidene-terminated polypropylene macromonomer synthesized in Reference Example 1 was placed was dried. Subsequently, in a nitrogen atmosphere, 53.5 mL of dry THF (manufactured by Wako Pure Chemical) was added thereto, and the mixture was cooled to about 0˚C with an ice bath. After 21 mL of a THF solution of 9-borabicyclo[3.3.1]nonane (0.5 mol/L, manufactured by Aldrich) was added thereto, reaction was allowed to proceed at room temperature for 5 hours. The mixture was cooled again to 0˚C, and 10.5 mL of an aqueous sodium hydroxide solution (3N) and 3.55 g of hydrogen peroxide solution (35% by weight, manufactured by Wako Pure Chemical) were added thereto. Reaction was allowed to proceed at 30˚C for 2 hours. After 25 mL of a saturated aqueous potassium carbonate solution was added thereto, a THF solution was obtained by liquid separation and concentrated, and a hexane-soluble portion was washed with water. A hexane solution obtained by liquid separation was concentrated and dried (yield 6.0 g).

A 200-mL four-necked flask in which 6.0 g of the product was placed was dried. Subsequently, in a nitrogen atmosphere, 54 mL of dry methylene chloride (manufactured by Wako Pure Chemical), 6 mL of dry chloroform (manufactured by Wako Pure Chemical), and 9 mL of triethylamine (manufactured by Wako Pure Chemical) dried with a molecular sieve were added thereto, and the mixture was cooled to about 0˚C with an ice bath. Methacryloyl chloride (manufactured by Wako Pure Chemical) (4.5 mL) was added thereto, and stirring was performed for about 18 hours at room temperature. The solution was concentrated, dissolved in hexane, and subjected to precipitation in methanol. This process was repeated twice. The precipitate was dried under reduced pressure and weighed (yield 4.0 g, number average molecular weight 2,200). The $^1$H NMR spectrum showed a proton peak of the terminal methacryl at around 5.5 and 6.1 ppm.

(Comparative Example 1) Radical copolymerization of vinylidene-terminated polypropylene macromonomer and n-butyl acrylate

To a 200-mL four-necked flask, 70.mL of water (manufactured by Wako Pure Chemical), 16g of n-butyl acrylate, 0.32g of allyl methacrylate, and 4 g of the vinylidene-terminated polypropylene macromonomer synthesized in Reference Example 1 were fed, and oxygen was removed by nitrogen bubbling. Sodium dodecyl sulfate (manufactured by Wako Pure Chemical) (1.8 g) was added thereto, and stirring was performed to emulsify the mixture. The resulting emulsion was heated to 80˚C, and 1.6 mL of ammonium persulfate (2% by weight aqueous solution, manufactured by Wako Pure Chemical) was added thereto. Reaction was allowed to proceed for 3 hours. Thereby, a latex of a copolymer was obtained. Calcium chloride (manufactured by Wako Pure Chemical) was added to the latex to aggregate a solid component. The solid component was washed with water and dried. Thereby, a copolymer was obtained (polymerization

conversion ratio 92.2%, average particle size 61 nm, gel content 90.9%). The shape of the resulting copolymer is shown in Table 1.

A sample in an amount of about 100 mg was placed in a 300 mesh net bag made of stainless steel and immersed in 100 mL of hexane at room temperature for 24 hours or more. Then, the sample was dried under reduced pressure at room temperature for 4 hours or more, and the hexane-insoluble component in the sample was obtained. In the $^1$H NMR spectrum of the hexane-insoluble component, besides the peak derived from poly(n-butyl acrylate), the peak of the methyl proton of polypropylene derived from the polypropylene macromonomer was not substantially confirmed. Thus, it was evident that the polypropylene macromonomer and the poly(n-butyl acrylate) were not substantially grafted.

(Comparative Example 2) Radical copolymerization of methacryl-terminated polypropylene macromonomer and n-butyl acrylate

A copolymer was obtained as in Comparative Example 1 except that 4 g of the methacryl-terminated polypropylene macromonomer synthesized in Reference Example 2 was used instead of 4 g of the vinylidene-terminated polypropylene macromonomer synthesized in Reference Example 1 (polymerization conversion ratio 83.9%, average particle size 52nm, gel content 97.8%). The shape of the resulting copolymer is shown in Table 1.

In the $^1$H NMR spectrum of hexane-insoluble component, besides the peak derived from poly(n-butyl acrylate), the peak of the methyl proton of polypropylene drived from the polypropylene macromonomer was confirmed at around 0.8 ppm. Thus, it was evident that the polypropylene macromonomer and poly(n-butyl acrylate) were copolymerized. However, the resulting product was highly viscous and could not be handled as powder, exhibiting poor handleability.

(Reference Example 3) Synthesis of single layer-structured macromonomer [poly(n-butyl acrylate)]

To a 200-mL glass four-necked flask equipped with a stirrer, a thermometer, and a reflux condenser, 280 mL of water (manufactured by Wako Pure Chemical), 64 g of n-butyl acrylate (manufactured by Nippon Shokubai), and 1.27 g of allyl methacrylate were fed, and oxygen was removed by nitrogen bubbling. Sodium dodecyl sulfate (manufactured by Wako Pure Chemical) (280 mg) was added thereto, and stirring was performed to emulsify the mixture. The resulting emulsion was.heated to 70°C under a nitrogen stream, and 6.4 mL of a 2% by weight aqueous solution of ammonium persulfate (manufactured by Wako Pure Chemical) was added thereto. Reaction was allowed to proceed for 3 hours. The reaction solution was left to cool to room temperature, and thereby 310 mL of a latex of a single layer-structured poly(n-butyl acrylate) macromonomer was obtained (polymerization conversion ratio 100%, average particle size 137 nm, gel content 0.8%).

(Comparative Example 3) Copolymerization of single layer-structured poly(n-butyl acrylate) macromonomer and ethylene

A palladium complex (hereinafter also referred to as [N^N]PdMeCl) having a structure represented by chemical formula (3):

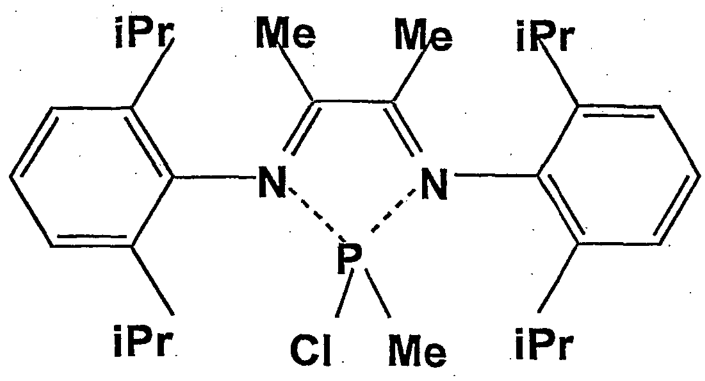

(3)

was synthesized by a known method described in Journal of the American Chemical Society (J. Am. Chem. Soc.) 1995, Vol. 117, p. 6414, or other documents. An 80 mmol/L diethyl ether solution (8 mL) of [N^N]PdMeCl and an 80 mmol/L diethyl ether solution (8 mL) of LiB $(C_6F_5)_4$ were mixed to precipitate LiCl. Thereby, a 40 mmol/L diethyl ether solution

(16 mL) of [N^N] $PdMe^{+}\cdot B(C_6F_5)_4^-$ complex was prepared.

A 40 mmol/L diethyl ether solution (15 mL) of [N^N] $PdMe+\cdot B(C_6F_5)_4^-$ complex was placed in a Schlenk tube and diethyl ether was removed by reducing the pressure at room temperature. Subsequently, 15 mL of methylene chloride was added to dissolve the complex to prepare a 40 mmol/L methylene chloride solution of [N^N] $PdMe^{+}\cdot B(C_6F_5)_4^-$ complex. The 40 mmol/L methylene chloride solution of [N^N] $PdMe^{+}\cdot B(C_6F_5)4^-$ complex (0.5 mL) was added to and mixed with 25 mL of the latex prepared in Reference Example 3 and 500 mg of sodium dodecyl sulfate, and ultrasonic treatment was performed for 5 minutes to disperse the complex catalyst homogeneously. The reaction mixture was fed in a pressure vessel purged with nitrogen. Ethylene was introduced thereto and the pressure was controlled to 2 MPa. After reaction was performed at room temperature for 7 hours, the pressure was released and the unreacted ethylene was removed. The resulting product was a mixture of a latex and a precipitate. The latex component was subjected to salting-out with an aqueous solution of calcium chloride, followed by post-treatment, i.e., filtration, water washing, and drying under reduced pressure. Thereby, a polyolefin graft copolymer was obtained. The shape of the resulting copolymer is shown in Table 1.

When 100 mg of the product obtained by salting-out of the latex was immersed in 100 mL of hexane at room temperature for 24 hours, insolubles remained. $^1H$ NMR analysis confirmed that these insolubles contained both the macromonomer component and the polyethylene component. Since free polyethylene dissolves in hexane, the insolubles correspond to a poly(n-butyl acrylate)-ethylene copolymer.

(Comparative Example 4) Copolymerization of single layer-structured poly(n-butyl acrylate) macromonomer and 1-hexene

To a 100-mL eggplant-shaped flask equipped with a stirrer and a nitrogen line, 25 mL of the latex prepared in Referenced Example 3 and 500 mg of sodium dodecyl sulfate were placed, and the mixture was bubbled with nitrogen. Then, a 40 mmol/L methylene chloride solution of the [N^N]$PdMe^{+}\cdot B(C_6F_5)_4^-$complex (0.5 mL) was added thereto, and the mixture was stirred under a nitrogen stream to achieve homogeneous dispersion. 1-Hexene (3 mL) was added thereto and reaction was performed at room temperature and normal pressure for 7 hours. Nothing was precipitated, and the product obtained was all in a latex state. The resulting latex was subjected to salting-out with an aqueous solution of calcium chloride, followed by post-treatment, i.e., filtration, water washing, and drying under reduced pressure, to obtain a polyolefin graft copolymer resin. The shape of the resulting copolymer is shown in Table 1.

(Reference Example 4) Synthesis of single layer-structured macromonomer [poly(methyl methacrylate)]

To a 200-mL glass four-necked flask equipped with a stirrer, a thermometer, and a reflux condenser, 70 mL of water (manufactured by Wako Pure Chemical), 16 g of methyl methacrylate (manufactured by Nippon Shokubai), and 0.84 g of ethylene glycol dicyclopentenyl ether methacrylate (manufactured by Aldrich) were fed, and oxygen was removed by nitrogen bubbling. Sodium dodecyl sulfate (manufactured by Wako Pure Chemical) (70 mg) was added thereto, and stirring was performed to emulsify the mixture. The resulting emulsion was heated to 70˚C under a nitrogen stream, and 0.8 mL of a 2% by weight aqueous solution of ammonium persulfate (manufactured by Wako Pure Chemical) was added thereto. Reaction was allowed to proceed for 3 hours. The reaction solution was left to cool to room temperature, and thereby 78 mL of a latex of a single layer-structured poly(methyl methacrylate) macromonomer was obtained (polymerization conversion ratio 95.9%, average particle size 99 nm, gel content 18.3%).

(Comparative Example 5) Copolymerization of single layer-structured poly(methyl methacrylate) macromonomer and ethylene

The same procedure was performed as in Comparative Example 3 except that 25 mL of the latex prepared in Reference Example 4 was used instead of 25 mL of the latex prepared in Reference Example 3. The resulting product was a mixture of a latex and a precipitate. The latex component was subjected to salting-out with an aqueous solution of calcium chloride, followed by post-treatment, i.e., filtration, water washing, and drying under reduced pressure, and the resulting mass of a hard resin was ground into a powder with a mortar. Thereby, a polyolefin graft copolymer was obtained. The shape of the resulting copolymer is shown in Table 1.

(Synthesis Example 1) Synthesis of two-layer-structured macromonomer [poly(n-butyl acrylate) core/methyl methacrylate shell, use of non-redox initiator]

To a 20.0-mL glass four-necked flask equipped with a stirrer, a thermometer, and a reflux condenser, 70 mL of water, 12 g of n-butyl acrylate, 0.05 g of allyl methacrylate, and 70 mg of sodium dodecyl sulfate were fed. The mixture was bubbled with nitrogen, and stirring was performed to emulsify the mixture. The resulting emulsion was heated to

70˚C under a nitrogen stream, and 1.6 mL of a 2% by weight aqueous solution of ammonium persulfate was added thereto to initiate the polymerization of a first layer. After 20 minutes, when the increase in the internal temperature due to reaction heat stopped and the liquid temperature decreased back to the temperature before the initiation of the reaction, 4.8 g of methyl methacrylate and 0.30 g of allyl methacrylate were added dropwise, and then 1.6 mL of a 2% by weight aqueous solution of ammonium persulfate was added thereto. Reaction was allowed to proceed for 3 hours and the polymerization of a second layer was completed. The reaction solution was left to cool to room temperature, and thereby a latex of a macromonomer having a core-shell structure including two layers of poly(n-butyl acrylate)/poly (methyl methacrylate) was obtained (polymerization conversion ratio 100%, average particle size 135 nm).

(Example 1) Copolymerization of two-layer-structured macromonomer and ethylene

The same procedure was performed as in Comparative Example 3 except that 25 mL of the latex prepared in Synthesis Example 1 was used instead of 25 mL of the latex prepared in Reference Example 3. The resulting product was a mixture of a latex and a precipitate. The latex component was subjected to salting-out with an aqueous solution of calcium chloride, followed by post-treatment, i.e., filtration, water washing, and drying under reduced pressure, and the resulting mass of a resin was ground into a powder with a mortar. Thereby, a polyolefin graft copolymer of the present invention was obtained. The shape of the resulting copolymer is shown in Table 1.

(Synthesis Example 2) Synthesis of two-layer-structured macromonomer [poly(n-butyl acrylate) core/methyl methacrylate shell, use of redox initiator]

To a 200-mL glass four-necked flask equipped with a stirrer, a thermometer, a reflux condenser, and a dropping funnel, 60 mL of water, 1.5 g of n-butyl acrylate, 0.3 g of allyl methacrylate, and 60 mg of sodium dodecyl sulfate were fed. The mixture was bubbled with nitrogen, and stirring was performed to emulsify the mixture. The resulting emulsion was heated to 50˚C under a nitrogen stream, and 0.3 mL of a 10% by weight aqueous sodium formaldehyde sulfoxylate solution, 0.4 mL of an aqueous solution in which 0.8 mg of iron sulfate and 0.8 mg of citric acid were dissolved, and 30 mg of cumene hydroperoxide were added thereto. Immediately after that, a mixed solution of 13.5 g of n-butyl acrylate and 0.27 g of allyl methacrylate was added dropwise from the dropping funnel over 10 minutes to initiate the polymerization of a first layer. When the increase in the internal temperature due to.reaction heat stopped and the liquid temperature decreased back to the temperature before the initiation of the reaction, a mixed solution of 2.64 g of methyl methacrylate, 0.30 g of allyl methacrylate, and 12 mg of sodium dodecyl sulfate was added dropwise from the dropping funnel, and then heating was performed for 3 hours to polymerize a second layer. The reaction solution was left to cool to room temperature, and thereby a latex of a macromonomer having a two-layer structure of poly(n-butyl acrylate)/poly(methyl methacrylate) was obtained (polymerization conversion ratio 98.9%, average particle size 140 nm).

(Example 2) Copolymerization of two-layer-structured macromonomer and ethylene

The same procedure was performed as in Comparative Example 3 except that 25 mL of the latex prepared in Synthesis Example 2 was used instead of 25 mL of the latex prepared in Reference Example 3. The resulting product was a mixture of a latex and a precipitate. The latex component was subjected to salting-out with an aqueous solution of calcium chloride, followed by post-treatment, i.e., filtration, water washing, and drying under reduced pressure. Thereby, a polyolefin graft copolymer of the present invention was obtained. The shape of the resulting copolymer is shown in Table 1.

(Example 3) Copolymerization of two-layer-structured macromonomer and 1-hexene

The same procedure was performed as in Comparative Example 4 except that 25 mL of the latex prepared in Synthesis Example 2 was used instead of 25 mL of the latex prepared in Reference Example 3. Nothing was precipitated, and the product obtained was all in a latex state. The resulting latex was subjected to salting-out with an aqueous solution of calcium chloride, followed by post-treatment, i.e., filtration, water washing, and drying under reduced pressure. Thereby, a polyolefin graft copolymer resin of the present invention was obtained. The shape of the resulting copolymer is shown in Table 1.

(Synthesis Example 3) Synthesis of two-layer-structured macromonomer (polydimethylsiloxane core/methyl methacrylate shell, use of redox initiator)

Water (1,600 g), octamethylcyclotetrasiloxane (1,600 g), 3-acryloxypropylmethyldimethoxysilane (80 g), and a 15% aqueous sodium dodecylbenzene sulfonate solution (53.3 g) were emulsified with a homogenizer, and the resulting

emulsion was fed in a separable flask equipped with a stirrer, a thermometer, and a reflux condenser. Water (3,235 g) was further added thereto. The mixture was heated to 80˚C, and 160 g of 10% aqueous dodecylbenzene sulfonic acid solution was added thereto. Reaction was allowed to proceed for 6 hours. The reaction solution was left to stand overnight at room temperature and then neutralized by an aqueous sodium hydroxide solution. Thus, a latex of polydimethylsiloxane which was a first layer was synthesized. The resulting latex (500 mL) was placed in a separable flask equipped with a stirrer, a thermometer, and a reflux condenser, and oxygen was removed by nitrogen bubbling. An aqueous solution (5.0 mL) of 0.2% citric anhydride/0.2% iron sulfate heptahydrate and a 10% aqueous sodium formaldehyde sulfate solution (1.38 mL) were added thereto, and the mixture was heated to 40˚C. An 80% aqueous cumene hydroperoxide solution (0.05 g) and allyl methacrylate (1.0 g) were added to the mixture, and reaction was allowed to proceed for 1 hour. Subsequently, an 80% aqueous cumene hydroperoxide solution (0.08 g), methyl methacrylate (20 g), and allyl methacrylate (0.5 g) were added thereto, and reaction was allowed to proceed for 2 hours. Thus, a poly(methyl methacrylate) layer which was a second layer was polymerized. Thereby, a latex of a macromonomer having a core-shell structure including two layers of polydimethylsiloxane/poly(methyl methacrylate) was obtained.

(Example 4) Copolymerization of two-layer-structured macromonomer and ethylene

The same procedure was performed as in Comparative Example 3 except that 25 mL of the latex prepared in Synthesis Example 3 was used instead of 25 mL of the latex prepared in Reference Example 3. The resulting product was a mixture of a latex and a precipitate. The latex component was poured into methanol in an amount twice that of the latex to precipitate the solid component. The solid component was subjected to post-treatment, i.e., filtration, water washing, and drying under reduced pressure. Thereby, a polyolefin graft copolymer of the present invention was obtained.

TABLE 1

| | Starting materials | | Copolymer produced by salting-out | | Evaluation (Handleability) |
|---|---|---|---|---|---|
| | Starting macromonomer | Monomer | Shape | Powder flowability | |
| Comparative Example 1 | Vinylidene-terminated PP in Reference Example 1 | n-Butyl acrylate | Transparent, highly viscous (not copolymerized) | 0% | × |
| Comparative Example 2 | Methacryl-terminated PP in Reference Example 2 | n-Butyl acrylate | Transparent, highly viscous | 0% | × |
| Comparative Example 3 | Single layer-structured PBA in Reference Example 3 | Ethylene | Grey, rubber-like solid | 23% | × |
| Comparative Example 4 | Single layer-structured PBA in Reference Example 3 | 1-Hexene | Orange white, rubber-like solid | 56% | Δ |
| Comparative Example 5 | Single layer-structured PMMA in Reference Example 4 | Ethylene | White, hard powder | 99% | ○ |
| Example 1 | PBA/PMMA in Synthesis Example 1 | Ethylene | White, hard powder | 100% | ○ |
| Example 2 | PBA/PMMA in Synthesis Example 2 | Ethylene | White powder | 100% | O |

(continued)

| | Starting materials | | Copolymer produced by salting-out | | Evaluation (Handleability) |
|---|---|---|---|---|---|
| | Starting macromonomer | Monomer | Shape | Powder flowability | |
| Example 3 | PBA/PMMA in Synthesis Example 2 | 1-Hexene | Light yellow white powder | 100% | O |
| Example 4 | PDMS/PMMA in Synthesis Example 3 | Ethylene | Light grey white powder | 100% | O |
| PP = polypropylene PBA = poly(n-butyl acrylate) PMMA = poly(methyl methacrylate) PDMS = polydimethylsiloxane<br>Evaluation (Handleability): × = powder flowability less than 30%<br>Δ = powder flowability 30% to less than 90%<br>○ = powder flowability 90% or more | | | | | |

(Comparative Example 6) Polypropylene resin alone

Using a laboplastomill (manufactured by Toyo Seiki, capacity 30 cc), 20 g of a polypropylene resin (F232DC manufactured by Grand Polymer) was kneaded at 200˚C and 100 rpm for 10 minutes, and then a sheet with a thickness of about 0.7 mm was formed by pressing (pressing conditions: 200˚C, zero pressure, 10 min → 200˚C, 50 kgf/$cm^2$, 10 min → room temperature, 50 kgf/$cm^2$, 5 min). The tensile properties and surface wettability of the resulting sheet were measured. The results thereof are shown in Table 2.

(Comparative Examples 7 to 11) Compositions not containing polyolefin graft copolymer of present invention

Using a laboplastomill (manufactured by Toyo Seiki, capacity 30 cc), 4 g of the product prepared in each of Comparative Examples 1 to 5 and 20 g of a polypropylene resin (F232DC manufactured by Grand Polymer) were kneaded at 200˚C and 100 rpm for 10 minutes, and then a sheet with a thickness of about 0.7 mm was formed by pressing (pressing conditions: 200˚C, zero pressure, 10 min → 200˚C, 50 kgf/$cm^2$, 10 min → room temperature, 50 kgf/$cm^2$, 5 min). The tensile properties and surface wettability of the resulting sheets were measured. The results thereof are shown in Table 2.

(Examples 5 to 7) Compositions containing polyolefin graft copolymer of present invention

Using a laboplastomill (manufactured by Toyo Seiki, capacity 30 cc), 4 g of the product prepared in each of Examples 1 to 3 and 20 g of a polypropylene resin (F232DC manufactured by Grand Polymer) were kneaded at 200˚C and 100 rpm for 10 minutes, and then a sheet with a thickness of about 0.7 mm was formed by pressing (pressing conditions: 200˚C, zero pressure, 10 min → 200˚C, 50 kgf/$cm^2$, 10 min → room temperature, 50 kgf/$cm^2$, 5 min). The tensile properties and surface wettability of the resulting sheets were measured. The results thereof are shown in Table 2.

TABLE 2

| | | | Tensile properties | | | | | Surface wettability | |
|---|---|---|---|---|---|---|---|---|---|
| | Resin added to PP | Amount of addition per 100 parts of PP | Maximum stress (MPa) | Maximum elongation (%) | Evaluation (Dispersibility) | Elastic modulus (MPa) | Evaluation (Low elastic modulus) | Surface tension (μN/cm) | Evaluation (Surface wettability) |
| Comparative Example 6 | None | | 35.1 | 730 | ○ | 543 | × | less than 300 | × |
| Comparative Example 7 | Product in Comparative Example 1 | 20 parts | 10.8 | 98 | × | 284 | ○ | 320 | ○ |
| Comparative Example 8 | Copolymer in Comparative Example 2 | 20 parts | 10.3 | 100 | × | 291 | ○ | 320 | ○ |
| Comparative Example 9 | Copolymer in Comparative Example 3 | 20 parts | 25.3 | 645 | ○ | 391 | ○ | 333 | ○ |
| Comparative Example 10 | Copolymer in Comparative Example 4 | 20 parts | 19.6 | 532 | ○ | 289 | ○ | 325 | ○ |
| Comparative Example 11 | Copolymer in Comparative Example 5 | 20 parts | 21.6 | 436 | ○ | 680 | × | 310 | Δ |
| Example 5 | Copolymer in Example 1 | 20 parts | 22.9 | 561 | ○ | 445 | ○ | 330 | ○ |
| Example 6 | Copolymer in Example 2 | 20 parts | 23.3 | 653 | ○ | 400 | ○ | 330 | ○ |
| Example 7 | Copolymer in Example 3 | 20 parts | 17.3 | 472 | ○ | 350 | ○ | 325 | ○ |
| Evaluation (Dispersibility): × = maximum elongation less than 150%<br>○ = maximum elongation 150% or more | | | | | | | | | |

(continued)

| |
|---|
| Evaluation (Low elastic modulus): × = elastic modulus 500 MPa or more<br>○ = elastic modulus less than 500 MPa<br>Evaluation (Surface wettability): × = Surface tension less than 310 μN/cm<br>Δ = Surface tension 310 μN/cm to less than 320 μN/cm<br>○ = Surface tension 320 μN/cm or more |

Table 3 shows a summary of handleability shown in Table 1 and dispersibility (tensile elongation), low elastic modulus, and surface wettability shown in Table 2.

TABLE 3

| | (Handleability) | (Dispersibility) | (Low elastic modulus) | (Surface wettability) | Comprehensive evaluation |
|---|---|---|---|---|---|
| Comparative Example 1 | × | × | ○ | ○ | × |
| Comparative Example 2 | × | × | ○ | ○ | × |
| Comparative Example 3 | × | ○ | ○ | ○ | × |
| Comparative Example 4 | Δ | ○ | ○ | ○ | × |
| Comparative Example 5 | ○ | ○ | × | Δ | × |
| Example 1 | ○ | ○ | ○ | ○ | ◎ |
| Example 2 | ○ | ○ | ○ | ○ | ◎ |
| Example 3 | ○ | ○ | ○ | ○ | ◎ |
| Comprehensive evaluation: ◎ = All of handleability, dispersibility, low elastic modulus, and surface wettability are evaluated to be ○.<br>× = At least one of handleability, dispersibility, low elastic modulus, and surface wettability is evaluated to be × or Δ. | | | | | |

As described above, in the method in which the polyolefin macromonomer is allowed to react with the polar vinyl monomer or the method in which the macromonomer which does not have a multilayer structure is allowed to react with the olefin monomer, it is difficult to produce a copolymer which has all of good handleability and good dispersibility (tensile elongation), and low elastic modulus and high surface wettability in the resulting composition. The copolymer produced using the macromonomer having a multilayer structure and the olefin monomer according to the present invention has excellent handleability and excellent dispersibility (tensile elongation) in a thermoplastic resin, such as a polyolefin; and in the composition including the copolymer, the increase in elastic modulus is suppressed, and excellent surface wettability is shown. Industrial Applicability

When a (meth)acrylic rubber core is used as a starting material, polyolefin graft copolymers of the present invention exhibit physical properties representing polarity or physical properties exhibited as a result of polarity, such as low contact angle, high surface tension, surface wettability, adhesiveness, paintability, dyeability, high dielectric constant, and high-frequency sealing properties. Consequently, the polyolefin graft copolymers can be used for polarity-imparting agents (adhesiveness, paintability, dyeability, high-frequency sealing properties, etc.) for thermoplastic resins, in particular, for polyolefins, compatibilizers, primers, coating materials, adhesives, paint, surfactants for polyolefin/filler composite materials and polyolefin nanocomposites, and other applications. The polyolefin graft copolymers can also be used for thermoplastic elastomers, high-impact plastics, and the like, each including a polyolefin as a resin component and a (meth)acrylic rubber as a rubber component.

When a multilayer-structured macromonomer including a silicone rubber core is used as a starting material, polyolefin graft copolymers of the present invention exhibit excellent low temperature properties derived from low Tg and excellent functionality derived from the silicon content, such as mold-release properties, formability, gas permeability, water repellency, weatherability, and surface lubricating properties. Consequently, the polyolefin graft copolymers can be used in agents for improving low-temperature brittleness, plasticizers, flame retardants, impact modifiers, sliding property-imparting agents, etc., for thermoplastic resins, in particular, for polyolefins.

## Claims

1. A polyolefin graft copolymer produced, in the presence of a coordination polymerization catalyst, by copolymerizing an olefin monomer and a macromonomer having a multilayer structure in an aqueous system.

**2.** The polyolefin graft copolymer according to Claim 1, wherein the macromonomer having the multilayer structure is a macromonomer having a two-layered structure including 10% to 95% by weight of a layer composed of a rubber-like polymer and 5% to 90% by weight of a layer composed of a hard polymer.

**3.** The polyolefin graft copolymer according to either Claim 1 or 2, wherein the macromonomer having the multilayer structure is produced by emulsion polymerization using a redox initiator.

**4.** The polyolefin graft copolymer according to any one of Claims 1 to 3, wherein the coordination polymerization catalyst is a complex containing a ligand having two imine nitrogen atoms and a late transition metal selected from Groups 8 to 10 in the periodic table.

**5.** The polyolefin graft copolymer according to any one of Claims 1 to 4, wherein the olefin monomer is an $\alpha$-olefin.

**6.** A method for producing the polyolefin graft copolymer according to any one of Claims 1 to 5, the method comprising allowing a macromonomer having a multilayer structure, an olefin monomer, and a coordination polymerization catalyst to react with each other in an aqueous system.

**7.** A thermoplastic resin composition containing the polyolefin graft copolymer according to any one of Claims 1 to 6.

**8.** The thermoplastic resin composition according to Claim 7, wherein the composition contains a polyolefin resin as a component.

## INTERNATIONAL SEARCH REPORT

International application No.
PCT/JP2004/015881

A. CLASSIFICATION OF SUBJECT MATTER
Int.Cl[7] C08F290/02

According to International Patent Classification (IPC) or to both national classification and IPC

B. FIELDS SEARCHED

Minimum documentation searched (classification system followed by classification symbols)
Int.Cl[7] C08F290/00-290/14, C08F299/00-299/08

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-147032 A (Kaneka Corp.), 21 May, 2003 (21.05.03), Full text & WO 03/20779 A1 & EP 1440988 A | 1-8 |
| A | JP 10-218951 A (Kaneka Corp.), 18 August, 1998 (18.08.98), Full text (Family: none) | 1-8 |
| A | JP 9-272714 A (Kaneka Corp.), 21 October, 1997 (21.10.97), Full text & JP 9-272715 A & EP 789036 A3 & US 6420492 B1 & US 6441101 B1 & US 5986014 A1 & DE 69706077 T | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 January, 2005 (26.01.05) | 15 February, 2005 (15.02.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.
PCT/JP2004/015881

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-175953 A (Kaneka Corp.), 24 June, 2004 (24.06.04), Full text (Family: none) | 1-8 |

Form PCT/ISA/210 (continuation of second sheet) (January 2004)